# FASCICULE DE BREVET EUROPEEN

(11) **EP 4 281 659 B1**
(45) Date de publication et mention de la délivrance du brevet: **06.11.2024**
(21) Numéro de dépôt: 22702768.7
(22) Date de dépôt: 13.01.2022
(51) Int. Cl.: B64D 27/40, F01D 25/04, F02C 7/20, F01D 25/28

(54) **ENSEMBLE COMPORTANT UNE TURBOMACHINE D'AERONEF ET SON PYLONE D'ACCROCHAGE**
ANORDNUNG MIT EINEM FLUGZEUGTURBINENTRIEBWERK UND MONTAGEPYLON DAFÜR
ASSEMBLY COMPRISING AN AIRCRAFT TURBINE ENGINE AND MOUNTING PYLON THEREOF

(30) Priorité: 21.01.2021 FR 2100556
(43) Date de publication de la demande: 29.11.2023
(73) Titulaire: SAFRAN AIRCRAFT ENGINES, 75015 Paris (FR)
(72) Inventeur: GLEMAREC, Guillaume, 77550 MOISSY-CRAMAYEL (FR); VIGNES, Jean-Baptiste, 77550 MOISSY-CRAMAYEL (FR); GENTILS, Romuald Muriel, 77550 MOISSY-CRAMAYEL (FR); CAPASSO, Valerio, 77550 MOISSY-CRAMAYEL (FR)
(74) Mandataire: Gevers & Orès
(86) Numéro de dépôt international: PCT/FR2022/050074
(87) Numéro de publication internationale: WO 2022/157443

(56) Documents cités:
- FR-A1- 2 969 700
- FR-A1- 3 053 661
- US-A- 4 717 094

## Description

### Domaine technique de l'invention

La présente invention concerne un ensemble comportant une turbomachine d'aéronef et son pylône d'accrochage.

### Arrière-plan technique

L'état de la technique comprend notamment les documents FR-A1-2 969 700, FR-A1-2 987 401 et FR-A1-3 053 661.

Une turbomachine d'aéronef comprend un générateur de gaz qui comporte classiquement, d'amont en aval, par référence à l'écoulement des gaz dans la turbomachine, au moins un compresseur, une chambre annulaire de combustion et au moins une turbine. Dans le cas d'un turboréacteur à double corps, respectivement basse pression et haute pression, le générateur de gaz comporte successivement un compresseur basse pression, un compresseur haute pression, la chambre de combustion, la turbine haute pression et la turbine basse pression. Le générateur de gaz définit une veine annulaire d'écoulement d'un flux de gaz qui traverse les compresseurs, la chambre de combustion et les turbines.

Le rotor du compresseur haute pression est relié au rotor de la turbine haute pression par un arbre haute pression. Le rotor du compresseur basse pression et relié au rotor de la turbine basse pression par un arbre basse pression qui traverse l'arbre haute pression et qui entraîne en rotation une hélice de propulsion située en général à l'amont du générateur de gaz.

Lorsque cette hélice est carénée et donc entourée par un carter annulaire, cette hélice est appelée soufflante et génère un flux d'air qui s'écoule autour du générateur de gaz. Lorsque l'hélice n'est pas carénée, elle génère également un flux d'air qui s'écoule autour du générateur de gaz.

La turbomachine est fixée à un élément de l'aéronef, tel qu'une voilure ou le fuselage, par l'intermédiaire d'un pylône d'accrochage aussi appelé mât. Ce pylône a en général une forme générale allongée et comprend une poutre qui s'étend parallèlement à l'axe longitudinal de la turbomachine. Dans le cas où la turbomachine est fixée sous une voilure de l'aéronef, le pylône est situé à 12h (12 heures) par analogie avec le cadran d'une horloge.

Dans la technique actuelle, le pylône comprend des organes amont de suspension de la turbomachine et des organes aval de suspension de la turbomachine. Cette configuration entraîne cependant des inconvénients. En effet, en fonctionnement, le générateur de gaz assure une transmission des efforts entre les points de fixation amont et aval au pylône, qui se traduisent par des déformations du générateur et de gaz et par des modifications des jeux entre les rotors et les stators du générateur de gaz. Le générateur de gaz est ainsi soumis à un moment généré par les efforts axiaux (poussée et reprise de poussée désaxées). La turbomachine est en outre soumise à un moment généré par la dissymétrie d'efforts axiaux sur les aubes de l'hélice de soufflante, et à des efforts provenant de la captation d'air (efforts de manche) par la turbomachine.

On comprend donc que les performances et l'opérabilité de la turbomachine peuvent être affectées par ces efforts.

Une solution à ce problème consiste à fixer en porte-à-faux la turbomachine au pylône. Cela revient donc à suspendre une partie avant ou amont de la turbomachine au pylône et à laisser libre la partie arrière ou aval de la turbomachine, telle que son carter de turbine par exemple.

Cependant, le montage de la turbomachine en porte-à-faux présente des inconvénients :
- Il n'y a plus de maintien de la partie arrière de la turbomachine, et donc plus de butée en cas de déplacement trop important de la turbomachine ;
- Cette partie en porte-à-faux va présenter un mode de flexion tournant à relativement basse fréquence pouvant être excité par des balourds et notamment des balourds liés à la perte d'une aube de soufflante ;
- Les charges liées à la perte d'une aube de turbine basse-pression transiteront dans toute la ligne du carter en porte-à-faux, ce qui se traduirait par des charges et vibrations significatives à la base du porte-à-faux mais aussi des déplacements importants notamment à l'extrémité aval de la turbomachine ;
- Des problématique de tenue des carters et des équipements liés à ces carters ; etc.

La présente invention propose un perfectionnement aux technologies actuelles, qui permet de résoudre au moins une partie des problèmes et inconvénients évoqués ci-dessus.

### Résumé de l'invention

L'invention concerne un ensemble comportant une turbomachine d'aéronef et un pylône d'accrochage de la turbomachine à un élément de l'aéronef, la turbomachine ayant un axe longitudinal et comportant un générateur de gaz comprenant d'amont en aval, dans le sens d'écoulement des gaz, au moins un compresseur, une chambre annulaire de combustion et au moins une turbine, le pylône ayant une forme générale allongée le long dudit axe et comportant des organes de suspension de la turbomachine, ces organes étant reliés à la turbomachine dans au moins un plan qui est perpendiculaire à l'axe et qui est situé en amont de la chambre de combustion de façon à ce que la turbomachine soit fixée en porte-à-faux au pylône, caractérisé en ce qu'il comprend en outre au moins un amortisseur qui relie la turbomachine au pylône et qui est situé dans un plan perpendiculaire à l'axe situé en aval de la chambre de combustion, cet amortisseur étant configuré pour limiter les déplacements relatifs entre la turbomachine et le pylône sans transmettre d'efforts.

L'invention propose ainsi d'amortir la partie arrière ou aval d'une turbomachine montée en porte-à-faux par sa partie avant ou amont sur un pylône. Bien que cet amortisseur soit disposé à l'aval de la turbomachine, et en particulier en aval de la chambre de combustion, cet amortisseur n'a pas vocation à transmettre d'efforts de la turbomachine vers le pylône mais seulement à amortir et limiter les déplacements relatifs et vibrations de la turbomachine en fonctionnement. L'amortisseur forme donc une liaison souple par opposition à un organe de suspension classique qui forme une liaison rigide.

L'ensemble selon l'invention peut comprendre une ou plusieurs des caractéristiques suivantes, prises isolément les unes des autres ou en combinaison les unes avec les autres :
- ledit amortisseur est configuré pour limiter les déplacements (entre la turbomachine et le pylône) sans transmission d'efforts dans ledit plan sur une première course prédéterminée dans une première direction contenue dans ledit plan, et sur une seconde course prédéterminée dans une seconde direction contenue dans ledit plan et perpendiculaire à la première direction, et pour bloquer tout déplacement de la turbomachine vis-à-vis du pylône au-delà de ces courses avec transmission d'efforts ; pour éviter des déplacements trop importants de la turbomachine, au-delà de certaines courses de déplacement de la turbomachine, celle-ci est bloquée par l'amortisseur qui assure alors une transmission d'efforts entre le turbomachine et le pylône ; l'amortisseur a ainsi un rôle différent selon le fonctionnement de la turbomachine ; en fonctionnement normal, il a un rôle d'amortisseur classique (ou de liaison souple) et en fonctionnement ultime, il a un rôle de transmission d'efforts (ou de liaison rigide) ;
- l'amortisseur comprend au moins deux bielles, une première bielle comportant une première extrémité articulée sur le pylône et une seconde bielle comportant une première extrémité articulée sur la turbomachine, les première et seconde bielles comportant des secondes extrémités qui sont reliées ensemble par un dispositif d'amortissement, les premières et secondes extrémités des bielles ayant des axes d'articulation ou de liaison sensiblement parallèles entre eux et à l'axe longitudinal de la turbomachine ;
- les premières extrémités des bielles sont reliées par des liaisons rotulantes respectivement au pylône et à la turbomachine ;
- le dispositif d'amortissement est du type à palette et comprend une cage solidaire de l'une des première et seconde bielles, et une palette solidaire de l'autre des première et seconde bielles, la palette étant apte à tourner dans une cavité de la cage, qui est remplie d'un liquide d'amortissement ;
- le liquide d'amortissement est un liquide non newtonien ;
- le liquide d'amortissement est un liquide newtonien ;
- la cavité de la cage comprend des butées configurées pour limiter le débattement angulaire de la palette dans la cavité ;
- la palette comprend deux oreilles diamétralement opposées et configurées pour prendre appui sur lesdites butées ;
- le dispositif d'amortissement est du type à piston ou à ressort ;
- le dispositif d'amortissement est équipé d'un capteur de mouvement.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue très schématique d'un ensemble comportant une turbomachine d'aéronef et son pylône d'accrochage, selon la technique antérieure à l'invention ;
[Fig.2] la figure 2 est une vue très schématique d'une turbomachine d'aéronef et montre des points de fixation et de suspension à un pylône d'accrochage, selon la technique antérieure à l'invention ;
[Fig.3] la figure 3 est une vue très schématique d'une autre turbomachine d'aéronef et montre des points de fixation et de suspension à un pylône d'accrochage, selon la technique antérieure à l'invention ;
[Fig.4] la figure 4 est une vue schématique en perspective d'un ensemble selon l'invention comportant une turbomachine d'aéronef et son pylône d'accrochage ;
[Fig.5] la figure 5 est une vue schématique de face d'un amortisseur selon un premier mode de réalisation de l'invention ;
[Fig.6] la figure 6 est une vue schématique d'un dispositif d'amortissement à palettes de l'amortisseur de la figure 5 ;
[Fig.7] la figure 7 est une vue schématique de côté de l'amortisseur de la figure 4 ;
[Fig.8] la figure 8 est une vue similaire à celle de la figure 7 et illustre avec cette figure 7 la capacité de déplacement et d'articulation de l'amortisseur ;
[Fig.9a-9b] les figures 9a et 9b sont des vues similaires à celle de la figure 5 et montrent respectivement deux positions extrêmes de l'amortisseur ;
[Fig.9c-9d] les figures 9c et 9d sont des vues similaires à celle de la figure 5 et montrent respectivement deux autres positions extrêmes de l'amortisseur ;
[Fig.10a-10b] les figures 10a et 10b sont des vues similaires à celles des figures 9a et 9d et illustrent une variante de réalisation ;
[Fig.11a-11b] les figures 11a et 11b sont des vues similaires à celles des figures 9a et 9d et illustrent une autre variante de réalisation ;
[Fig.12] la figure 12 est une vue similaire à celle de la figure 5 et illustre une autre variante de l'invention ; et
[Fig.13] la figure 13 est une vue similaire à celle de la figure 5 et illustre une autre variante de l'invention.

### Description détaillée de l'invention

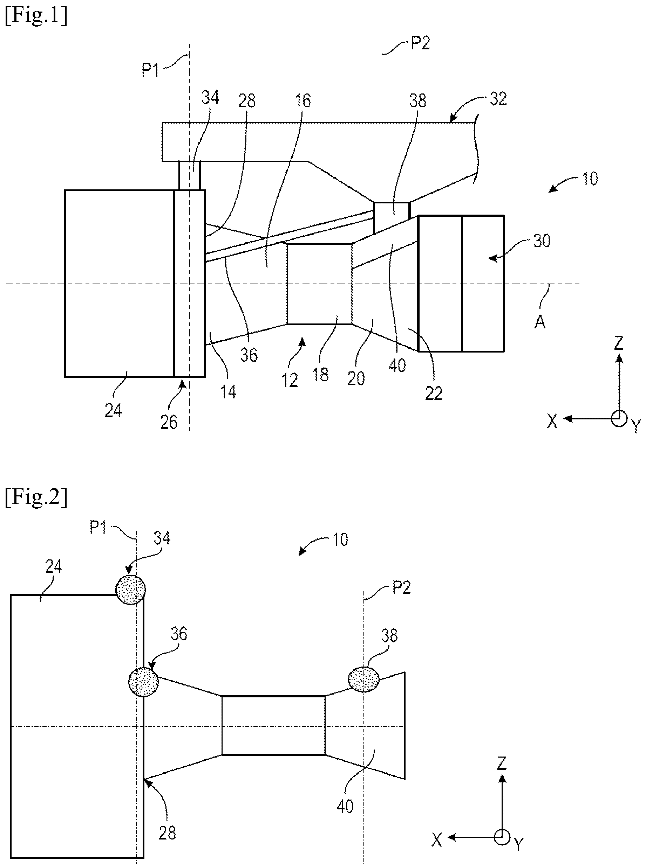

La figure 1 montre une turbomachine 10 pour un aéronef, cette turbomachine 10 étant ici un turboréacteur à double flux et double corps.

L'axe A désigne l'axe longitudinal de la turbomachine. Le repère orthonormé XYZ est représenté dans certaines figures dont la figure 1. La direction X est parallèle à l'axe X et orientée vers l'amont ou l'avant de la turbomachine 10, l'axe Z est orienté vers le haut, et l'axe Y est orienté vers un côté.

La turbomachine 10 comprend un générateur de gaz 12 qui comporte d'amont en aval par référence à l'écoulement des gaz le long de l'axe A, un compresseur BP 14 ou basse pression, un compresseur HP 16 ou haute pression, une chambre annulaire de combustion 18, une turbine HP 20 ou haute pression et une turbine BP 22 ou basse pression.

Bien que cela ne soit pas visible dans la figure 1, le rotor du compresseur HP 16 est relié au rotor de la turbine HP 20 par un arbre haute pression, et le rotor du compresseur BP 14 et relié au rotor de la turbine BP 22 par un arbre basse pression qui traverse l'arbre haute pression et qui entraîne en rotation une hélice de propulsion située à l'amont du générateur de gaz 12 et qui est entourée par un carter annulaire appelé carter de soufflante 24.

Le carter de soufflante 24 est relié au générateur de gaz 12 par un carter intermédiaire 26 qui comprend un moyeu central 28 et une série de bras radiaux de liaison du moyeu 28 au carter de soufflante 24.

Le générateur de gaz 12 définit une veine annulaire principale d'écoulement d'un premier flux d'air, appelé flux primaire. Le générateur de gaz est entouré par une veine annulaire secondaire d'écoulement d'un second flux d'air, appelé flux secondaire.

Le flux d'air entrant dans la soufflante se divise en une partie formant le flux primaire. L'air de ce flux primaire est comprimé dans les compresseurs BP 14 et HP 16, puis mélangé à du carburant et brûlé dans la chambre de combustion 18. Les gaz de combustion du flux primaire sont ensuite détendus dans les turbines HP 20 et BP 22 et s'écoulent enfin dans une tuyère d'échappement 30.

L'autre partie du flux d'air entrant dans la soufflante forme le flux secondaire et est destiné à être mélange au flux primaire en aval de la tuyère 30.

La turbomachine 10 est fixé à un élément de l'aéronef par l'intermédiaire d'un pylône 32 qui a une forme générale allongée le long de l'axe A et qui comporte des organes 34, 36, 38 de fixation et de suspension de la turbomachine 10.

Les figures 1 à 3 illustrent l'état de la technique antérieur à la présente invention.

Dans le premier cas illustré aux figures 1 et 2, il y a trois points ou zones de fixation du pylône 32 à la turbomachine 10. Deux des points sont situés dans un plan amont ou avant P1 perpendiculaire à l'axe A et le dernier point est situé dans un plan aval ou arrière P2 perpendiculaire à l'axe A.

Au niveau du plan P1, un premier organe de fixation 34 assure la liaison du pylône 32 au carter de soufflante 24. Au niveau du plan P2, l'organe de fixation 38 assure la fixation du pylône 32 à un carter de turbine ou d'échappement 40. Cet organe de fixation 38 est en outre relié par des barres de reprise de poussée 36 au moyeu 28 du carter intermédiaire 26. Ces barres 36 assurent la transmission de la poussée de la turbomachine 10 au pylône 32 et donc à l'aéronef.

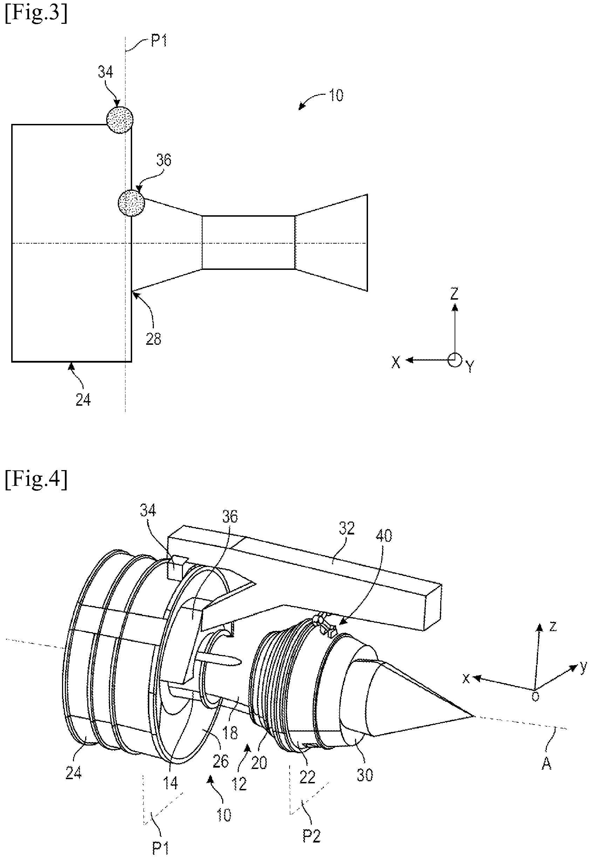

Dans le second cas illustré à la figure 3, il y a seulement les deux points de fixation dans le plan P1 précité, et donc la turbomachine est fixée en porte-à-faux au pylône 32. Dans ce cas, au niveau du plan P1, l'organe de fixation 34 assure la liaison du pylône 32 au carter de soufflante 24, et des bielles de reprise de poussée 36 assurent la liaison du moyeu 28 du carter intermédiaire 26 au pylône 32, par l'intermédiaire d'un organe de fixation (non représenté) qui est fixé au pylône sans être fixé à la turbomachine.

La figure 4 illustre de manière schématique le principe général de l'invention qui est de prévoir, en plus des organes 34, 36 de suspension de la turbomachine 10 qui sont situés en amont de la chambre de combustion 18, au moins un amortisseur 40 qui relie la turbomachine 10 au pylône 32 et qui est situé en aval de la chambre de combustion 18.

Les organes 34, 36 reprennent les charges suivant les directions Y et Z ainsi que les moments Mx, My et Mz dans toutes les directions. La poussée de la turbomachine suivant la direction X est reprise par un système intégré aux organes 34 ou 36 ou indépendant.

L'amortisseur 40 s'étend dans un plan P2 qui est perpendiculaire à l'axe A et qui passe par exemple par un carter de turbine ou d'échappement de la turbomachine 10. L'amortisseur 40 est configuré pour limiter les déplacements relatifs entre la turbomachine 10 et le pylône 32 sans transmettre d'efforts, comme cela sera expliqué dans ce qui suit.

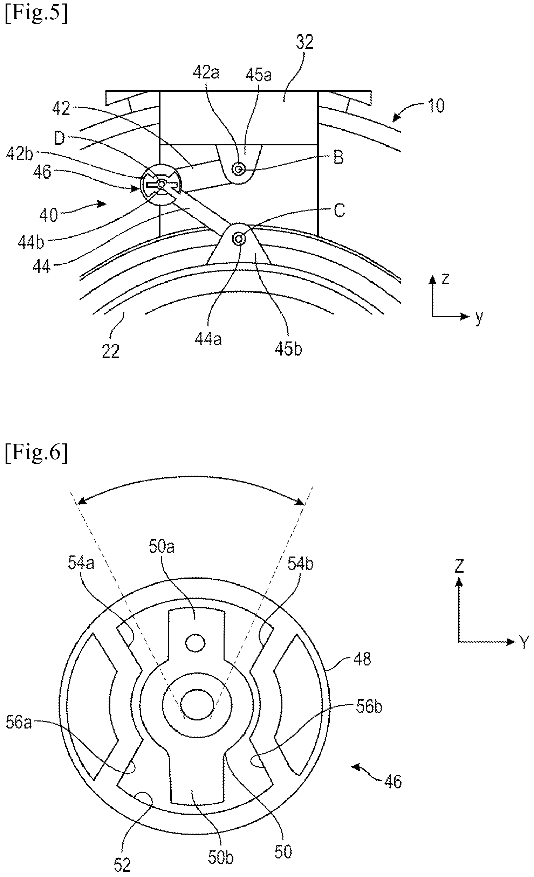

Les figures 5 à 9d illustrent un premier mode de réalisation de l'amortisseur 40 qui est ici du type à palette.

L'amortisseur 40 comprend au moins deux bielles 42, 44. Une première bielle 42 comporte une première extrémité 42a articulée sur une chape 45a du pylône 32 et la seconde bielle 44 comporte une première extrémité 44a articulée sur une chape 45b de la turbomachine 10.

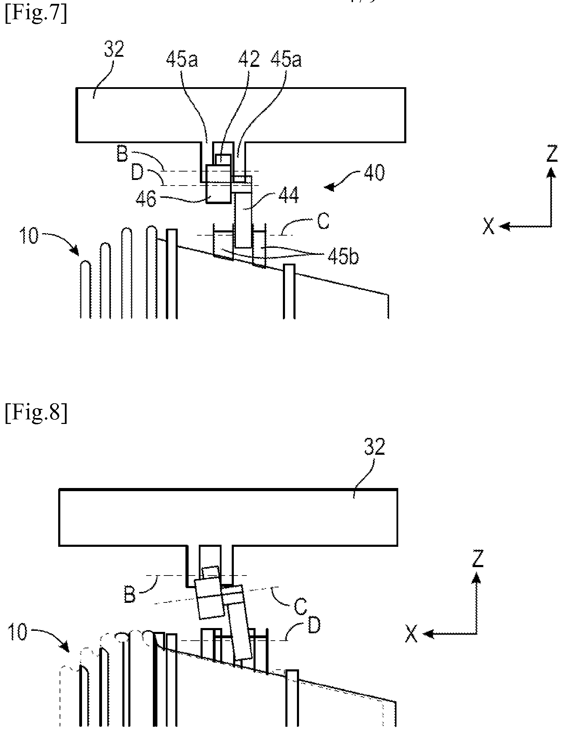

Les bielles 42, 44 comportent des secondes extrémités 42b, 44b qui sont reliées ensemble par un dispositif d'amortissement 46. Comme cela est visible aux figures 7 et 8, les extrémités 42a, 42b, 44a, 44b des bielles 42, 44 ont des axes B, C, D d'articulation ou de liaison sensiblement parallèles entre eux et à l'axe longitudinal A de la turbomachine 10, en particulier en position de repos visible à la figure 7.

Les extrémités 42a, 44a des bielles 42, 44 sont de préférence reliées par des liaisons rotulantes respectivement au pylône 32 et à la turbomachine 10, de façon à ce que l'amortisseur 40 puisse autoriser des déplacements relatifs de la turbomachine 10 vis-à-vis du pylône 32, le long de l'axe A (cf. figure 8). Ceci permet de ne pas générer de contraintes lors de l'allongement moteur lié à la température de fonctionnement.

Dans ce premier mode de réalisation, le dispositif d'amortissement 46 est du type à palette et comprend une cage 48 solidaire de la bielle 42, et une palette 50 solidaire de la bielle 44. La palette 50 est apte à tourner dans une cavité 52 de la cage 48, qui est remplie d'un liquide d'amortissement.

Dans l'exemple représenté, la cavité 52 de la cage 48 comprend des butées 54a, 54b, 56a, 56b configurées pour limiter le débattement angulaire de la palette 50 dans la cavité (cf. figure 6), et donc les déplacements relatifs de la turbomachine 10 vis-à-vis du pylône 32. La palette 50 comprend deux oreilles 50a, 50b diamétralement opposées et configurées pour prendre appui sur les butées 54a, 54b, 56a, 56b. L'oreille 50a peut se déplacer entre la butée 54a et la butée 54b, et l'oreille 50b peut se déplacer entre la butée 56a et la butée 56b. Une première position limite de la palette 50 dans la cavité 48 correspond au cas où les oreilles 50a, 50b sont en appui respectivement sur les butées 54a et 56b. Une seconde position limite de la palette 50 dans la cavité 48 correspond au cas où les oreilles 50a, 50b sont en appui respectivement sur les butées 54b et 56a.

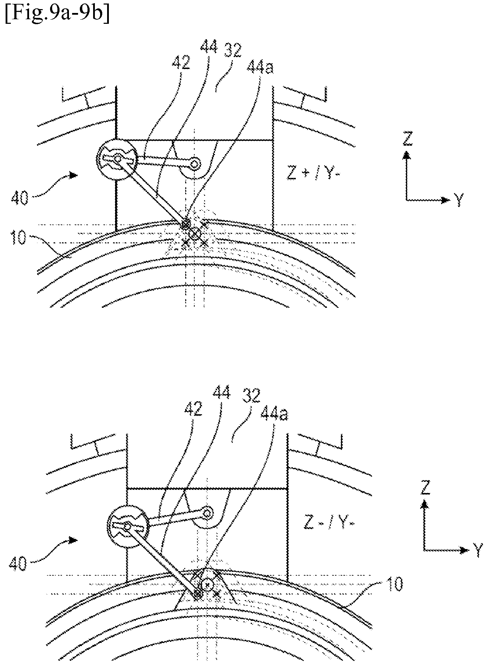

Les figures 9a à 9d montrent quant à elles les positions extrêmes de la turbomachine 10 vis-à-vis du pylône 32, dans le plan P2 dans lequel s'étend l'amortisseur 40.

Dans la figure 9a, la turbomachine 10 s'est déplacée vers le haut (déplacement suivant l'axe Z : Z+), et aussi sur un côté (déplacement suivant l'axe Y = Y-), vis-à-vis du pylône 32. L'extrémité 44a de la bielle 44, et en particulier son axe de liaison à la turbomachine, est située sur un premier angle d'un carré de déplacement de cette extrémité dans le plan précité.

La longueur d'un côté de ce carré correspond à la course prédéterminée de déplacement de la partie arrière de la turbomachine vis-à-vis du pylône. Ce carré a deux côtés parallèles orientés suivant la direction Z et deux côtés parallèles orientés suivant la direction Y.

Dans la figure 9b, la turbomachine 10 s'est déplacée vers le bas (déplacement suivant l'axe Z : Z-), et du même côté que dans la figure 9a (déplacement suivant l'axe Y : Y-), vis-à-vis du pylône 32. L'extrémité 44a de la bielle 44 est située sur un deuxième angle du carré de déplacement.

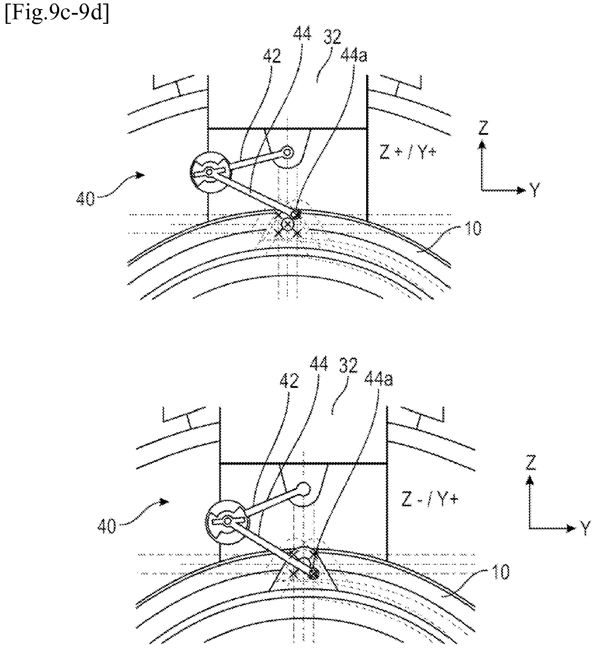

Dans la figure 9c, la turbomachine 10 s'est déplacée vers le haut (déplacement suivant l'axe Z : Z+), et aussi sur un côté opposé (déplacement suivant l'axe Y : Y+), vis-à-vis du pylône 32. L'extrémité 44a de la bielle 44 est située sur un troisième angle du carré de déplacement.

Enfin, dans la figure 9d, la turbomachine 10 s'est déplacée vers le bas (déplacement suivant l'axe Z : Z-), et du même côté que dans la figure 9c (déplacement suivant l'axe Y : Y+), vis-à-vis du pylône 32. L'extrémité 44a de la bielle 44 est située sur un quatrième et dernier angle du carré de déplacement.

Au-delà de ces courses, la palette vient en appui sur les butées de la cage pour bloquer tout déplacement supplémentaire de la turbomachine et pour assurer si besoin la transmission d'efforts de la turbomachine vers le pylône.

Le liquide contenu dans la cavité 48 de déplacement de la palette 50 peut être newtonien ou non newtonien.

Un fluide non newtonien est un fluide dont la viscosité est variable en fonction de la contrainte ou de la force appliquée et du temps. L'exemple le plus courant d'un fluide non newtonien est la fécule de maïs dissoute dans l'eau.

Le comportement des fluides newtoniens comme l'eau peut être décrit exclusivement par la température et la pression. Cependant, le comportement physique du fluide non newtonien dépend des forces qui agissent sur lui dans le temps. Ainsi, la viscosité de certains fluides augmente quand la force soumise s'accroît. Ils sont appelés fluides rhéoépaississants. A l'inverse, la viscosité de certains fluides diminue lorsqu'ils sont soumis à une force, il s'agit des fluides rhéofluidifiants.

Dans le cas de l'utilisation d'un liquide newtonien, ce liquide peut être une huile, un liquide siliconé, de l'eau, etc.

Dans le cas préféré d'utilisation d'un liquide non newtonien, ce liquide est de préférence rhéoépaississant et est par exemple un fluide constitué de grains rugueux dans un liquide. Lorsqu'il y a beaucoup plus de grains que de liquide, au repos, les grains glissent les uns sur les autres, le mélange est alors très peu visqueux. Cependant, lorsqu'on y applique une contrainte, les grains se bloquent les uns contre les autres, et le liquide ne peut plus s'écouler entre eux. Le mélange se solidifie et sa viscosité augmente.

La turbomachine se déplace dans les directions Z et Y, comme illustré aux figures 9a à 9d, en fonction des contraintes appliquées sur les stators

### (incidence de vol, vibrations, décollage, atterrissage, etc.)

Les quatre positions maximales engendrent une différence angulaire entre les deux bielles 42, 44 de l'amortisseur 40. Cette différence angulaire, avec le liquide non newtonien dans la cavité 48 génère plusieurs réactions :
- Un mouvement lent de la palette 50, et/ou une force faible appliquée par la palette, la viscosité du liquide reste faible,
- Un mouvement rapide de la palette 50, la viscosité du liquide augmente ce qui amortit et limite ce mouvement.

L'utilisation du liquide non newtonien permet ainsi un taux d'amortissement évolutif, en fonction de la vitesse et de l'effort transmis par la palette 50.

L'invention permet donc de protéger la structure de charges importantes notamment dans le cas de charges dynamiques ultimes (perte de d'aube d'hélice ou d'une partie de couronne d'aubes de turbine) ou dans les cas de manoeuvres statiques ultimes (facteur de G/gyroscopique) tout en conservant les intérêts du système de suspension choisi en porte-à-faux pour protéger la performance de la turbomachine dans les cas de charges nominaux.

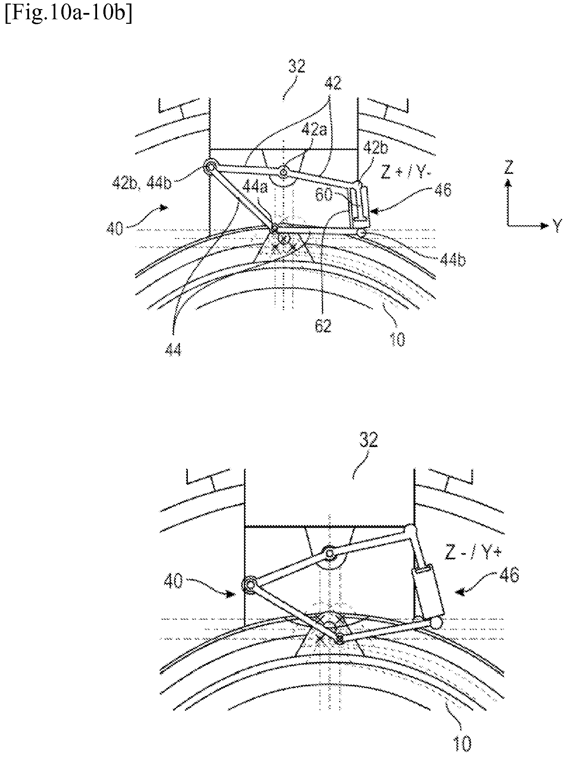

Les figures 10a et 10b illustrent un deuxième mode de réalisation de l'amortisseur 40 qui est ici du type à piston 60.

L'amortisseur 40 comprend ici quatre bielles 42, 44. Deux premières bielles 42 comportent chacune une première extrémité 42a articulée sur le pylône 32 et deux secondes bielles 44 comportent chacune une première extrémité 44a articulée sur la turbomachine 10.

Les secondes extrémités 42b, 44b de l'une des bielles 42 et de l'une des bielles 44 sont articulées l'une à l'autre. Les secondes extrémités 42b, 44b de l'autre des bielles 42 et de l'autre des bielles 44 sont reliées ensemble par un dispositif d'amortissement 46 à piston 60.

Les extrémités 42a, 44a des bielles 42, 44 sont de préférence reliées par des liaisons rotulantes respectivement entre elles et au pylône 32 et à la turbomachine 10.

Le dispositif d'amortissement 46 comprend un piston 60 qui est solidaire de la bielle 42, et un cylindre 62 qui est solidaire de la bielle 44 et dans lequel peut coulisser le piston 60. Le piston 60 est apte à coulisser dans le cylindre dans le plan P2 précité.

Le cylindre 62 est rempli d'un liquide d'amortissement, comme évoqué dans ce qui précède.

La course de l'amortisseur 40 est calculée pour avoir une plage fonctionnelle et une marge avec deux butées de fin de course du piston.

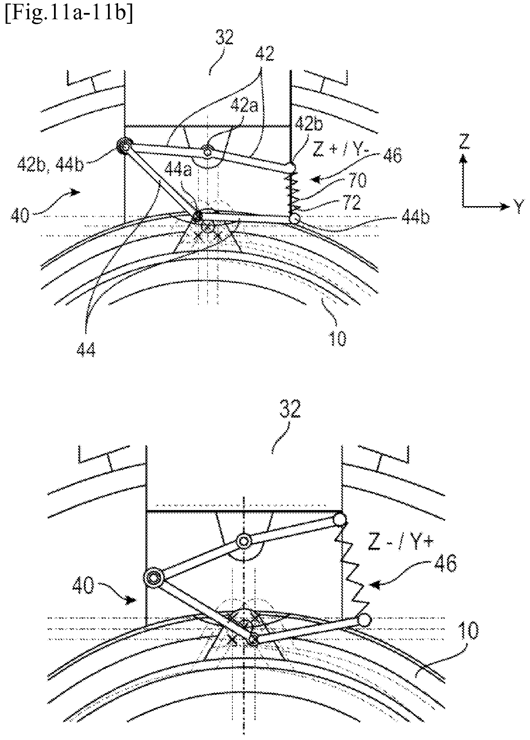

Les figures 11a et 11b illustrent un deuxième mode de réalisation de l'amortisseur 40 qui est ici du type à ressort, c'est-à-dire à élément élastiquement déformable.

L'amortisseur 40 comprend ici quatre bielles 42, 44. Deux premières bielles 42 comportent chacune une première extrémité 42a articulée sur le pylône 32 et deux secondes bielles 44 comportent chacune une première extrémité 44a articulée sur la turbomachine 10.

Les secondes extrémités 42b, 44b de l'une des bielles 42 et de l'une des bielles 44 sont articulées l'une à l'autre. Les secondes extrémités 42b, 44b de l'autre des bielles 42 et de l'autre des bielles 44 sont reliées ensemble par un dispositif d'amortissement 46 à ressort 70.

Les extrémités 42a, 44a des bielles 42, 44 sont de préférence reliées par des liaisons rotulantes respectivement entre elles et au pylône 32 et à la turbomachine 10.

Le dispositif d'amortissement 46 comprend un ressort 70 qui est solidaire de la bielle 42, et un guide 72 qui est solidaire de la bielle 44 et dans ou sur lequel peut se déformer le ressort 70. Le ressort 70 est apte à se déformer dans le plan P2 précité.

La course de l'amortisseur 40 est calculée pour avoir une plage fonctionnelle et une marge avec deux butées de fin de course du ressort.

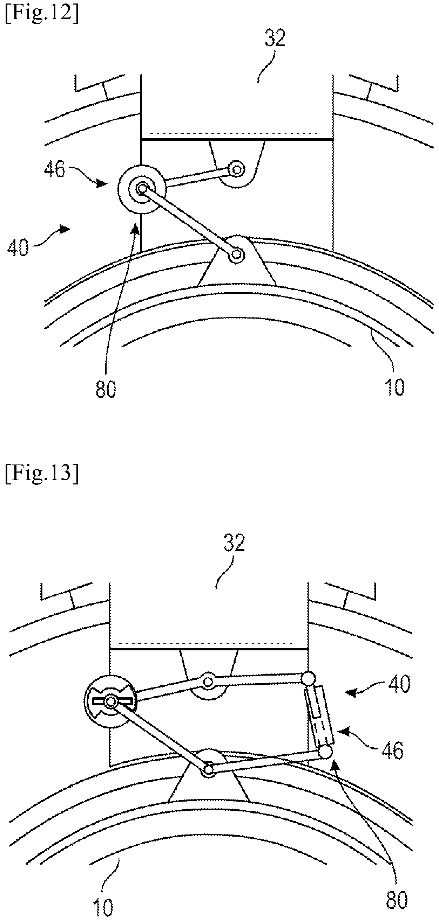

Les figures 12 et 13 illustrent d'autres variantes qui consistent à équiper le dispositif d'amortissement 46 d'un capteur de mouvement 80.

Dans le cas de la figure 12, le dispositif d'amortissement 46 à palette 50 est équipé d'un capteur 80 de mouvement rotatif qui mesure donc les débattements angulaires de la palette 50 autour de son axe de rotation.

Dans le cas de la figure 13, le dispositif d'amortissement 46 à piston 70 ou ressort 80 est équipé d'un capteur 80 de translation qui mesure donc les débattements du piston ou les déformations du ressort.

En fonctionnement nominal, les déplacements relatifs et les vibrations de la turbomachine sont ainsi amortis par l'amortisseur. C'est par l'exemple le cas en fonctionnement normal de la turbomachine et de manoeuvres de l'aéronef. Il n'y a alors pas de transmission d'efforts entre la turbomachine et le pylône. En fonctionnement ultime, par exemple de perte d'aube et de manoeuvres ultimes de l'aéronef, l'amortisseur se bloque et assure une transmission des efforts.

L'invention propose ainsi de positionner un amortisseur 40 entre la turbomachine 10 et le pylône 32 pour :
- Créer une butée qui serait activée uniquement en cas de grand déplacement (système dimensionné pour une certaine valeur),
- Limiter la mise en résonnance de la turbomachine en porte-à-faux par l'amortisseur, et
- Générer aucun effort sur la turbomachine en porte-à-faux en fonctionnement normal (déplacement limité et fréquence vibratoire faible).

## Revendications

1. Ensemble comportant une turbomachine (10) d'aéronef et un pylône (32) d'accrochage de la turbomachine à un élément de l'aéronef,
la turbomachine ayant un axe longitudinal (A) et comportant un générateur de gaz (12) comprenant d'amont en aval, dans le sens d'écoulement des gaz, au moins un compresseur (14, 16), une chambre annulaire de combustion (18) et au moins une turbine (20, 22),
le pylône ayant une forme générale allongée le long dudit axe (A) et comportant des organes (34, 36) de suspension de la turbomachine (10), ces organes étant reliés à la turbomachine dans au moins un plan (P1) qui est perpendiculaire à l'axe (A) et qui est situé en amont de la chambre de combustion (18) de façon à ce que la turbomachine (10) soit fixée en porte-à-faux au pylône (32),
**caractérisé en ce qu'**il comprend en outre au moins un amortisseur (40) qui relie la turbomachine (10) au pylône (32) et qui est situé dans un plan (P2) perpendiculaire à l'axe (A) situé en aval de la chambre de combustion (18), cet amortisseur (40) étant configuré pour limiter les déplacements relatifs dans ledit plan (P2) entre la turbomachine (10) et le pylône (32) sans transmission d'efforts.

2. Ensemble selon la revendication 1, dans lequel ledit amortisseur (40) est configuré pour limiter les déplacements sans transmission d'efforts dans ledit plan (P2) sur une première course prédéterminée dans une première direction (Z) contenue dans ledit plan (P2), et sur une seconde course prédéterminée dans une seconde direction (Y) contenue dans ledit plan (P2) et perpendiculaire à la première direction (Z), et pour bloquer tout déplacement de la turbomachine vis-à-vis du pylône au-delà de ces courses avec transmission d'efforts.

3. Ensemble selon la revendication 1 ou 2, dans lequel l'amortisseur (40) comprend au moins deux bielles (42, 44), une première bielle (42) comportant une première extrémité (42a) articulée sur le pylône (32) et une seconde bielle (44) comportant une première extrémité (44a) articulée sur la turbomachine (10), les première et seconde bielles (42, 44) comportant des secondes extrémités (42b, 44b) qui sont reliées ensemble par un dispositif d'amortissement (46), les premières et secondes extrémités (42a, 42b, 44a, 44b) des bielles (42, 44) ayant des axes (B, C, D) d'articulation ou de liaison sensiblement parallèles entre eux et à l'axe longitudinal (A) de la turbomachine.

4. Ensemble selon la revendication 3, dans lequel les premières extrémités (42a, 44a) des bielles (42, 44) sont reliées par des liaisons rotulantes respectivement au pylône (32) et à la turbomachine (10).

5. Ensemble selon la revendication 3 ou 4, dans lequel le dispositif d'amortissement (46) est du type à palette (50) et comprend une cage (48) solidaire de l'une des première et seconde bielles (42), et une palette (50) solidaire de l'autre des première et seconde bielles (44), la palette (50) étant apte à tourner dans une cavité (52) de la cage (48), qui est remplie d'un liquide d'amortissement.

6. Ensemble selon la revendication 5, dans lequel le liquide d'amortissement est un liquide non newtonien.

7. Ensemble selon la revendication 5, dans lequel le liquide d'amortissement est un liquide newtonien.

8. Ensemble selon l'une des revendications 5 à 7, dans lequel la cavité (52) de la cage (48) comprend des butées (54a, 54b, 56a, 56b) configurées pour limiter le débattement angulaire de la palette (50) dans la cavité (52).

9. Ensemble selon la revendication 8, dans lequel la palette (50) comprend deux oreilles (50a, 50b) diamétralement opposées et configurées pour prendre appui sur lesdites butées (54a, 54b, 56a, 56b).

10. Ensemble selon la revendication 3 ou 4, dans lequel le dispositif d'amortissement (46) est du type à piston (60) ou à ressort (70).

11. Ensemble selon l'une des revendications précédentes, dans lequel le dispositif d'amortissement (46) est équipé d'un capteur de mouvement (80).

## Patentansprüche

1. Anordnung, die ein Flugzeugturbotriebwerk (10) und einen Pylon (32) zur Montage des Turbotriebwerks an einem Flugzeugelement umfasst,
wobei das Turbotriebwerk eine Längsachse (A) aufweist und einen Gasgenerator (12) umfasst, der in der Gasströmungsrichtung von stromaufwärts nach stromabwärts mindestens einen Kompressor (14,16), eine ringförmige Brennkammer (18) und mindestens eine Turbine (20, 22) umfasst,
wobei der Pylon eine allgemeine entlang der Achse (A) langgestreckte Form aufweist und Elemente (34, 36) zur Aufhängung des Turbotriebwerks (10) umfasst, wobei diese Elemente derart mit dem Turbotriebwerk in mindestens einer Ebene (P1), die senkrecht zur Achse (A) ist und die sich stromaufwärts der Brennkammer (18) befindet, verbunden sind, dass das Turbotriebwerk (10) überhängend zum Pylon (32) befestigt ist,
**dadurch gekennzeichnet, dass** sie weiter mindestens einen Dämpfer (40) umfasst, der das Turbotriebwerk (10) mit dem Pylon (32) verbindet und der sich in einer Ebene (P2) senkrecht zur Achse (A) befindet, die sich stromabwärts der Brennkammer (18) befindet, wobei dieser Dämpfer (40) konfiguriert ist, um die relativen Verschiebungen in der Ebene (P2) zwischen dem Turbotriebwerk (10) und dem Pylon (32) ohne Kraftübertragung zu begrenzen.

2. Anordnung nach Anspruch 1, wobei der Dämpfer (40) konfiguriert ist, um die Verschiebungen ohne Kraftübertragung in der Ebene (P2) auf einer ersten vorbestimmten Strecke in einer ersten Richtung (Z), die in der Ebene (P2) enthalten ist, und auf einer zweiten vorbestimmten Strecke in einer zweiten Richtung (Y), die in der Ebene (P2) enthalten ist und senkrecht zur ersten Richtung (Z) ist, zu begrenzen und jegliche Verschiebung des Turbotriebwerks gegenüber dem Pylon jenseits dieser Strecken mit Kraftübertragung zu blockieren.

3. Anordnung nach Anspruch 1 oder 2, wobei der Dämpfer (40) mindestens zwei Pleuel (42, 44) umfasst, wobei ein erstes Pleuel (42) ein erstes Ende (42a) umfasst, das am Pylon (32) angelenkt ist, und ein zweites Pleuel (44) ein erstes Ende (44a) umfasst, das am Turbotriebwerk (10) angelenkt ist, wobei das erste und das zweite Pleuel (42, 44) zweite Enden (42b, 44b) umfassen, die über eine Dämpfvorrichtung (46) miteinander verbunden sind, wobei die ersten und zweiten Enden (42a, 42b, 44a, 44b) der Pleuel (42, 44) Achsen (B, C, D) zur im Wesentlichen parallelen Artikulation oder Verbindung untereinander und mit der Längsachse (A) des Turbotriebwerks aufweisen.

4. Anordnung nach Anspruch 3, wobei die ersten Enden (42a, 44a) der Pleuel (42, 44) durch Drehgelenkverbindungen mit dem Pylon (32) bzw. mit dem Turbotriebwerk (10) verbunden sind.

5. Anordnung nach Anspruch 3 oder 4, wobei die Dämpfvorrichtung (46) vom Palettentyp (50) ist und einen Käfig (48), der fest mit dem einen des ersten und des zweiten Pleuels (42) verbunden ist, und eine Palette (50) umfasst, die fest mit dem anderen des ersten und des zweiten Pleuels (44) verbunden ist, wobei die Palette (50) imstande ist, sich in einem Hohlraum (52) des Käfigs (48) zu drehen, der mit einer Dämpfflüssigkeit gefüllt ist.

6. Anordnung nach Anspruch 5, wobei die Dämpfflüssigkeit eine nichtnewtonsche Flüssigkeit ist.

7. Anordnung nach Anspruch 5, wobei die Dämpfflüssigkeit eine newtonsche Flüssigkeit ist.

8. Anordnung nach einem der Ansprüche 5 bis 7, wobei der Hohlraum (52) des Käfigs (48) Anschläge (54a, 54b, 56a, 56b) umfasst, die konfiguriert sind, um den Winkelausschlag der Palette (50) im Hohlraum (52) zu begrenzen.

9. Anordnung nach Anspruch 8, wobei die Palette (50) zwei Laschen (50a, 50b) umfasst, die sich diametral gegenüberliegen und konfiguriert sind, um auf den Anschlägen (54a, 54b, 56a, 56b) aufzuliegen.

10. Anordnung nach Anspruch 3 oder 4, wobei die Dämpfvorrichtung (46) vom Kolbentyp (60) oder vom Federtyp (70) ist.

11. Anordnung nach einem der vorstehenden Ansprüche, wobei die Dämpfvorrichtung (46) mit einem Bewegungssensor (80) ausgestattet ist.

## Claims

1. An assembly comprising an aircraft turbine engine (10) and a pylon (32) for mounting the turbine engine to an element of the aircraft,
the turbine engine having a longitudinal axis (A) and comprising a gas generator (12) comprising, from upstream to downstream, in the flowing orientation of the gases, at least one compressor (14, 16), an annular combustion chamber (18) and at least one turbine (20, 22),
the pylon having a generally elongate shape along said axis (A) and comprising members (34, 36) for suspending the turbine engine (10), these members being connected to the turbine engine in at least one plane (P1) which is perpendicular to the axis (A) and which is located upstream of the combustion chamber (18) so that the turbine engine (10) is attached in a cantilever manner to the pylon (32),
**characterised in that** it further comprises at least one damper (40) which connects the turbine engine (10) to the pylon (32) and which is located in a plane (P2) perpendicular to the axis (A) located downstream of the combustion chamber (18), this damper (40) being configured to limit the relative displacements in said plane (P2) between the turbine engine (10) and the pylon (32) without transmitting stresses.

2. The assembly according to claim 1, wherein said damper (40) is configured to limit the displacements without transmission of stresses in said plane (P2) over a first predetermined stroke in a first direction (Z) contained in said plane (P2), and over a second predetermined stroke in a second direction (Y) contained in said plane (P2) and perpendicular to the first direction (Z), and to block any displacement of the turbine engine relative to the pylon beyond these strokes with transmission of stresses.

3. The assembly according to claim 1 or 2, wherein the damper (40) comprises at least two links (42, 44), a first link (42) comprising a first end (42a) hinged to the pylon (32) and a second link (44) comprising a first end (44a) hinged to the turbine engine (10), the first and second links (42, 44) comprising second ends (42b, 44b) which are connected together by a damping device (46), the first and second ends (42a, 42b, 44a, 44b) of the links (42, 44) having hinge or connection axes (B, C, D) substantially parallel to each other and to the longitudinal axis (A) of the turbine engine.

4. The assembly as claimed in claim 3, wherein the first ends (42a, 44a) of the links (42, 44) are connected by swivel connections to the pylon (32) and to the turbine engine (10) respectively.

5. The assembly according to claim 3 or 4, wherein the damping device (46) is of the pallet (50) type and comprises a cage (48) secured to one of the first and second links (42), and a pallet (50) secured to the other of the first and second links (44), the pallet (50) being able to rotate in a cavity (52) of the cage (48), which is filled with a damping liquid.

6. The assembly as claimed in claim 5, wherein the damping liquid is a non-Newtonian liquid.

7. The assembly as claimed in claim 5, wherein the damping liquid is a Newtonian liquid.

8. The assembly according to one of claims 5 to 7, wherein the cavity (52) of the cage (48) comprises stops (54a, 54b, 56a, 56b) configured to limit the angular deflection of the pallet (50) in the cavity (52).

9. The assembly according to claim 8, wherein the pallet (50) comprises two diametrically opposed ears (50a, 50b) and configured to bear on said stops (54a, 54b, 56a, 56b).

10. The assembly according to claim 3 or 4, wherein the damping device (46) is of the piston (60) or spring (70) type.

11. The assembly according to one of the preceding claims, wherein the damping device (46) is equipped with a movement sensor (80).
